# EUROPEAN PATENT APPLICATION

(11) **EP 2 713 577 A1**
(43) Date of publication of application: **02.04.2014**
(21) Application number: 12840929.9
(22) Date of filing: 17.10.2012
(51) Int. Cl.: H04L 29/06, H04L 12/24

(54) **SERVICE DISTRIBUTION METHOD, DEVICE AND SYSTEM**

(30) Priority: 19.10.2011 CN 201110320321
(71) Applicant: Huawei Device Co., Ltd., Shenzhen, Guangdong 518129 (CN)
(72) Inventor: ZHANG, Qinliang, Shenzhen Guangdong 518129 (CN); ZHU, Yu, Shenzhen Guangdong 518129 (CN); ZHAO, Junjie, Shenzhen Guangdong 518129 (CN); ZHANG, Xiaotian, Shenzhen Guangdong 518129 (CN)
(74) Representative: Maiwald Patentanwalts GmbH
(86) International application number: PCT/CN2012/083050
(87) International publication number: WO 2013/056643

(57) **Abstract**

Embodiments of the present invention relate to a service provisioning method and system, so as two reduce message exchange between an auto-configuration server and a customer premises equipment, and improve service provisioning efficiency. The service provisioning method is: delivering, by an auto-configuration server, a script file, which includes at least two commands among commands required for delivering a service, to customer premises equipment, and executing, by the customer premises equipment, the script file, and generating and reporting a script file execution result.

## Description

### CROSS-REFERENCE TO RELATED APPLICATION

This application claims priority to Chinese Patent Application No. CN201110320321.6, filed with the Chinese Patent Office on October 19, 2011 and entitled "SERVICE PROVISIONING METHOD, DEVICE, AND SYSTEM", which is incorporated herein by reference in its entirety.

### TECHNICAL FIELD

Embodiments of the present invention relate to the field of communications technologies, and in particular, to a service provisioning method and system.

### BACKGROUND

The Broadband Forum (hereinafter referred to as BBF) defines a remote management protocol in its technical report TR-069. According to the protocol, an auto-configuration server (Auto-Configuration Server, hereinafter referred to as ACS) performs service provisioning for a customer premises equipment (Customer Premises Equipment, hereinafter referred to as CPE).

In the service provisioning process, multiple times of command exchange is required between the ACS and the CPE. For example, when the ACS adds a PortMapping instance on the CPE, the ACS needs to perform multiple times of query operations to determine which node the PortMapping instance needs to be added under, and then the ACS can add the PortMapping instance and set a parameter value of the PortMapping instance. The whole process includes multiple times of RPC (Remote Procedure Call Protocol) instruction exchange operations, and the procedure is as follows:

| **RPC** | **RPC parameter** | **Description** |
|---|---|---|
| GetParameterNames | InternetGatewayDevice.WANDevice.1.WANConnectio nDevice. | The ACS detemines, through multiple times o' query, which node the Podmappiiig instance needs. to be added under |
| GetParameterNames | InternetGatewayDevice.WANDevice.1.WANConnectio nDevice.24.WANPPPConnection. | |
| GetParameterNames | InternetGatewayDevice.WANDevice.1.WANConnectio nDevice.23.WAPPConnection. | |
| GetParameterValues | InternetGatewayDevice.WANDevice.1WANConnectionDevice.24.WANPPPConnection.1.Name | |
| GetParameterValues | InternetGatewayDevice.WANDevice.1.WANConnectio nDevice.23.WAPPPConnection.1.Name | |
| GetParameterNames | InternetGatewayDevice.WANDevice.1.WANConnectionDevice.23.WANPPPConnection.1.PortMapping. | |
| AddObject | InternetGatewayDevice.WANDevice.1.WANConnectionDevice.23.WANPPPconnection.1.PortMapping. | Add the PortMappinp instance |
| SetParameterValues | InternetGatewayDevice.WANDevice.1.WANConnectionDevice.23.WAPPPConnection.1.PortMapping.1. | Set the parameter value of the PortMapping instance |
| | PortMappingLeaseDuration | |
| | PortMapping.1.ExternalPort | |
| | PortMapping.1.InternalPort | |
| | PortMapping.1.PortMappingProtocol | |
| | PortMapping.1.InternalClient | |
| | PortMapping.1.PortMappingEnabled | |

The process of multiple times of command exchange increases network burden, and multiple times of message exchange also causes a long service provisioning time, affecting user experience.

### SUMMARY

Embodiments of the present invention provide a service provisioning method:

In one aspect, an auto-configuration server delivers a script file to a customer premises equipment, where the script file includes at least two commands among commands required by the auto-configuration server for delivering a service to the customer premises equipment; and the auto-configuration server receives a script file execution result reported by the customer premises equipment and generated after the script file is executed.

In another aspect, a customer premises equipment acquires a script file, where the script file includes at least two commands among commands required by an auto-configuration server for delivering a service to the customer premises equipment; the customer premises equipment executes the script file and generates a script file execution result; and the customer premises equipment reports the script file execution result.

Meanwhile, an embodiment of the present invention further provides an auto-configuration server, including:
a script file delivering unit, configured to deliver a script file to a customer premises equipment, where the script file includes at least two commands among commands required by the auto-configuration server for delivering a service to the customer premises equipment; and a script file execution result upload instruction sending unit, configured to send a script file execution result upload instruction to the customer premises equipment; or a script file execution result receiving unit, configured to receive a script file execution result generated and reported by the customer premises equipment after the script file is executed.

Meanwhile, an embodiment of the present invention further provides a customer premises equipment, including:
a script file receiving unit, configured to receive a script file; a script file executing unit, configured to execute the script file and generate a script file execution result; and a script file execution result reporting unit, configured to report the script file execution result.

Meanwhile, the present invention further provides a service provisioning system, including an auto-configuration server and a customer premises equipment, where
the auto-configuration server delivers a script file to the customer premises equipment, where the script file includes at least two commands among commands required by the auto-configuration server for delivering a service to the customer premises equipment; the customer premises equipment executes the script file and generates a script file execution result; and the customer premises equipment reports the script file execution result.

Through the technical solutions provided in the embodiments of the present invention, message exchange between the auto-configuration server and the customer premises equipment can be reduced, and time required for service provisioning can be reduced.

### BRIEF DESCRIPTION OF DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of Embodiment 1 of the present invention;
FIG. 2 is a flow chart of Embodiment 2 of the present invention;
FIG. 3 is a flow chart of Embodiment 3 of the present invention;
FIG. 4 is a structural diagram of Embodiment 4 of the present invention;
FIG. 5 is a structural diagram of Embodiment 5 of the present invention;
FIG. 6 is a structural diagram of Embodiment 6 of the present invention;
FIG. 7 is a structural diagram of Embodiment 7 of the present invention;
FIG. 8 is a structural diagram of Embodiment 8 of the present invention;
FIG. 9 is a structural diagram of Embodiment 9 of the present invention; and
FIG. 10 is a structural diagram of Embodiment 10 of the present invention.

### DESCRIPTION OF EMBODIMENTS

In order to make the objectives, technical solutions, and advantages of the present invention more comprehensible, specific embodiments of the present invention are described in further detail below with reference to the accompanying drawings.

### Embodiment 1

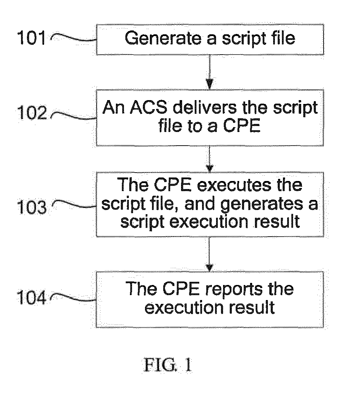

FIG. 1 is a flow chart of Embodiment 1 of the present invention. The following describes a procedure of Embodiment 1 of the present invention with reference to FIG. 1.

Step 101: Generate a script file. Content of the script file is at least two commands among commands required by an ACS for delivering a service to a CPE. Optionally, the script file may be automatically generated by the ACS, or manually written. Further optionally, after generation, the script file may be stored in the ACS for consequent use, or stored in a third-party device. Further optionally, at least two commands among the commands required by the ACS for delivering a service to the CPE may be RPC instructions.

Step 102: The ACS delivers the script file to the CPE.

Step 103: The CPE executes the script file, and generates a script file execution result.

Step 104: The CPE reports an execution result file to the ACS.

### Embodiment 2

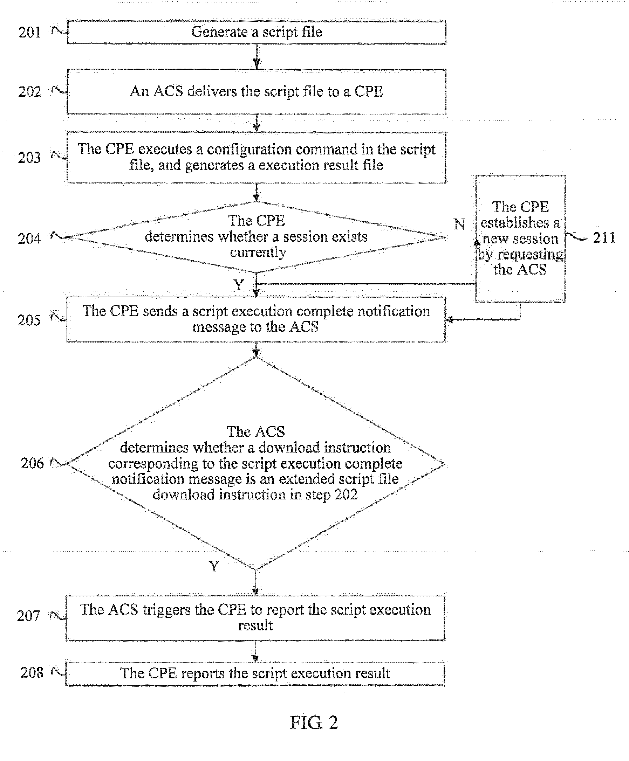

FIG. 2 is a flow chart of Embodiment 2 of the present invention. In Embodiment 2, an ACS delivers a script file to a CPE; and after completing executing the script file, the CPE reports a script file execution result to the ACS.

The following describes Embodiment 2 of the present invention with reference to FIG. 2.

Step 201: Generate a script file. Content of the script file is at least two commands among commands required by an ACS for delivering a service to CPE. Optionally, the script file may be automatically generated by the ACS, or manually written. Further optionally, after generation, the script file may be stored in the ACS for consequent use, or stored in a third-party device. Further optionally, at least two commands among the commands required by the ACS for delivering a service to the CPE may be RPC instructions.

Step 202: The ACS delivers the script file to the CPE. Optionally, the delivering may be implemented through the following steps: The ACS sends a script file download instruction to the CPE, where the script file download instruction includes a specified position from which the CPE downloads the script file; after receiving the instruction, the CPE sends a response message to the ACS, and sends a script file download request instruction to the specified position according to the script file download instruction; and the CPE receives the script file sent from the specified position. The script file download instruction needs to be extended, where an enumerated value that is used for indicating the script file is added in its file type parameter.

Optionally, the script file download instruction may be a Download() RPC instruction, the script file download request instruction may be an HTTP GET instruction, and the extension may be implemented by adding one enumerated value, indicating the script file, in a file type parameter Filetype of the Download() RPC instruction.

Step 203: The CPE executes a command in the script file, and generates a script file execution result, where the script file execution result includes a response record of execution of the command in the script file.

Step 204: The CPE determines whether a session exists currently, and if a session exists, executes step 205; if no session exists, executes step 211.

Step 211: The CPE establishes a new session, and then executes step 205. Optionally, the establishing a new session may be implemented through an Inform() RPC instruction.

Step 205: The CPE sends a script file execution complete notification message to the ACS by using the current session or the newly-established session, to notify the ACS that the script file has been executed completely, and generates the script file execution result. Optionally, the sending a script file execution complete notification message may be implemented through a TransferComplete() RPC instruction.

Step 206: The ACS determines whether a download instruction corresponding to the script file execution complete notification message is the extended script file download instruction in step 202, and if yes, executes step 207. Optionally, the determining may be implemented by determining whether a parameter value of a Command Key in the script file execution complete notification message TransferComplete() RPC is the same as a parameter value of a Command Key in the download instruction Download() RPC. Specifically, if the two parameter values are the same, it indicates the two correspond to each other, and step 207 is executed.

Step 207: The ACS triggers the CPE to upload the script file execution result. Optionally, the triggering may be implemented through the following step: the ACS sends a script file execution result upload instruction to the CPE, where the script file execution result upload instruction includes a specified position to which the CPE uploads the script file execution result. The script file execution result upload instruction needs to be extended, where an enumerated value that is used for indicating the script file is added in its file type parameter. Optionally, the script file execution result upload instruction may be an Upload() RPC instruction, and the extending may be implemented by adding one enumerated value, indicating the script file, in a Filetype parameter of the instruction.

Step 208: The CPE uploads the script file execution result according to the specified position. Optionally, after receiving the script file execution result upload instruction, the CPE sends a response message to the ACS, and uploads the script file execution result according to the specified position, and the procedure ends.

In the prior art, the ACS needs to perform multiple times of RPC exchange so as to deliver the service to the CPE, and the number of times of RPC instruction exchange between the ACS and the CPE depends on the complexity of the service. Different from the prior art, in this embodiment, the ACS can transfer, through the script file, all services, which need to be delivered, to the CPE with a fixed number of times of RPC instruction exchange, thereby effectively reducing message exchange between the auto-configuration server and the customer premises equipment, and reducing the time required for service provisioning.

### Embodiment 3

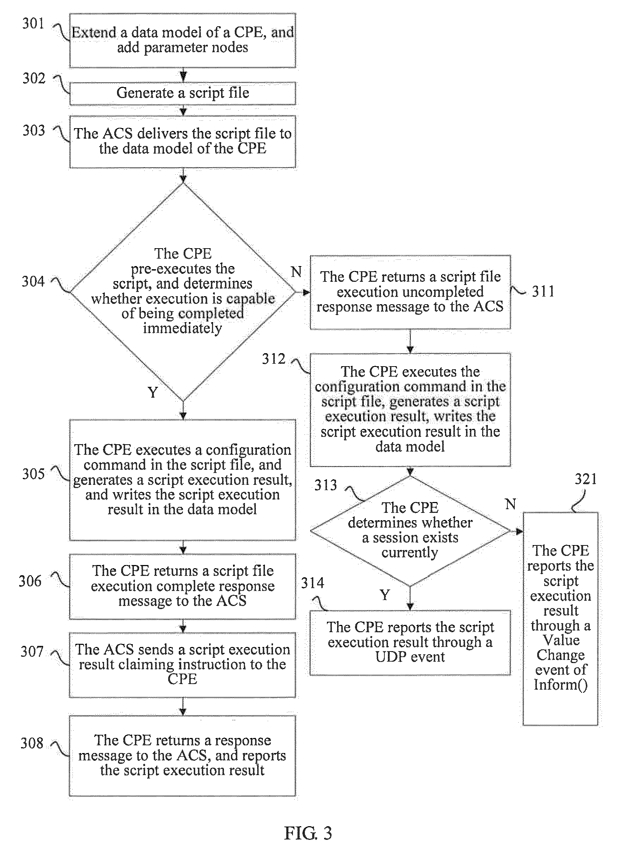

FIG. 3 is a flow chart of Embodiment 3 of the present invention. In Embodiment 3 of the present invention, an ACS delivers a script file to a parameter node of a data model of a CPE; and after completing executing the script file, the CPE writes a script file execution result in the parameter node of the data model, and reports the script file execution result to the ACS.

The following describes an implementation manner of Embodiment 3 of the present invention with reference to FIG. 3.

Step 301: Extend a data model of a CPE, and add parameter nodes related to storage and execution of a script file. Optionally, the following parameter nodes may be added:

| Parameter Node | Description |
|---|---|
| InternetGatewayDevice.Script.{i}. | Script object |
| InternetGatewayDevice:Script.{i}.Script | Store content of a script file |
| InternetGatewayDevtce.Script.{i}.ScriptResult | Store a script file execution result |
| InternetGatewayDevice.Script.{i}.Status | Indicate a script execution status |

(0 indicates that execution is in process, 1 indicates that execution is completed, and 2 indicates that a result is reported)

Step 302: Generate a script file. Content of the script file is at least two commands among commands required by an ACS for delivering a service to CPE. Optionally, the script file may be automatically generated by the ACS, or manually written. Further optionally, after generated, the script file may be stored in the ACS for consequent use, or stored in a third-party device. Further optionally, the at least two commands among the commands required by the ACS for delivering a service to the CPE may be RPC instructions.

Step 303: The ACS delivers the script file to the data model of the CPE. The delivering is implemented as follows: The ACS sets a parameter node which is in the data model of the CPE and indicates the script file, that is, the ACS writes the script file in the parameter node, and sets the parameter node, which is in the data model of the CPE and is used for indicating a script execution status, to "execution is in progress". Optionally, for an optional solution provided in step 101, the script file delivering process is to write the script file in the parameter node InternetGatewayDevice.Script.{i}.Script, and set a value of the parameter node InternetGatewayDevice.Script.{i}.Status to 0, indicating that for the script file, "execution is in progress." Further optionally, the delivering may be implemented as follows: The ACS sends a SetParameterValues() RPC instruction to the CPE.

Step 304: The CPE pre-executes the script file, and determines whether execution of the script file can be completed immediately. Optionally, the determining may be implemented by inferring an execution time of the script file according to the number of instructions in the script file; the execution time is compared with a preset threshold, and if the execution time is smaller than or equal to the threshold, it is determined that the execution of the script file can be completed immediately, and step 305 is executed; if the execution time is greater than the threshold, it is determined that the execution of the script file cannot be completed immediately, and step 311 is executed.

Step 305: The CPE executes a command in the script file, and generates a script file execution result, where the script file execution result includes a response record of the execution of the command in the script file; and writes the script file execution result in a parameter node which is in the data model of the CPE and used for storing the script file execution result, and sets a parameter node, which is in the data model of the CPE and is used for indicating a script execution status, to "execution is completed". Optionally, for an optional solution provided in step 101, it is required to write the script file execution result in the parameter InternetGatewayDevice.Script.{i}.ScriptResult, and set a value of the parameter InternetGatewayDevice.Script.{i}.Status to 1, indicating that for the script file, "execution is completed."

Step 306: The CPE returns an execution complete response message to the ACS, to notify the ACS that the execution of the script file is completed. Optionally, the response message may be a SetParameterValues Response, where status = 0, indicating that the execution of the script file is completed.

Step 307: The ACS sends a script file execution result claiming instruction to the CPE. Optionally, the script file execution result claiming instruction may be a GetParameterValues() RPC instruction.

Step 308: After receiving the execution result claiming instruction, the CPE returns a response message to the ACS, and reports the script file execution result, and then the procedure ends. Optionally, the response message may be a Get ParameterValues Response. Further optionally, the sending the execution result may be implemented by sending, together with the response message to the ACS, a value of a parameter node which is stored in the data model of the CPE and stores the script file execution result. For the solution provided in step 301, the CPE sends, together with the GetParameterValues Response and to the ACS, an execution result stored in InternetGatewayDevice.Script.{i}.ScriptResult.

Step 311: The CPE returns an execution uncompleted response message to the ACS, to notify the ACS that the execution of the script file is not completed yet. Optionally, the response message may be a SetParameterValues Response, where status = 1, indicating that the execution of the script file is not completed yet.

Step 312: The CPE executes a command in the script file, generates a script file execution result, writes the script file execution result in a parameter node which is in the data model of the CPE and is used for storing the script file execution result, and sets a parameter node, which is in the data model of the CPE and is used for indicating the script execution status, to "execution is completed". Optionally, for an optional solution provided in step 101, it is required to write the script file execution result in the parameter InternetGatewayDevice.Script.{i}.ScriptResult, and set a value of the parameter InternetGatewayDevice.Script.{i}.Status to 1, indicating that for the script file, "execution is completed."

Step 313: The CPE determines whether a session exists currently, and if a session exists, the CPE cannot reports the script file execution result through an Inform() RPC instruction, and needs to execute step 314; if no session exists, executes step 321.

Step 314: The CPE reports the script file execution result through a UDP (User Datagram Protocol, user datagram protocol) event, and the procedure ends.

Step 321: The CPE reports the execution result to the ACS through a Value Change event in the Inform() RPC instruction, and the procedure ends.

Optionally, this embodiment further includes other implementation manners, that is, the process that the CPE pre-executes the script file in step 304 may not be executed, but the script file is directly executed and the script file execution result is reported.

Further optionally, as a different implementation manner, the CPE may execute step 305 first, that is, execute the script file, then execute step 306, that is, return the execution complete response message to the ACS, and report the script file execution result in the manner described in steps 307 to 308; or the CPE may execute step 311 first, that is, return the execution uncompleted response message to the ACS, then execute step 312, that is, execute the script file, and report the script file execution result in the manner described in steps 313 to 314 and step 321.

In the prior art, the ACS needs to perform multiple times of RPC exchange so as to deliver the service to the CPE, and the number of times of RPC instruction exchange between the ACS and the CPE depends on the complexity of the service. Different from the prior art, in this embodiment, the ACS can transfer, through the script file, all services, which need to be delivered, to the CPE with a fixed number of times of RPC instruction exchange, thereby effectively reducing message exchange between the auto-configuration server and the customer premises equipment, and reducing the time required for service provisioning.

### Embodiment 4

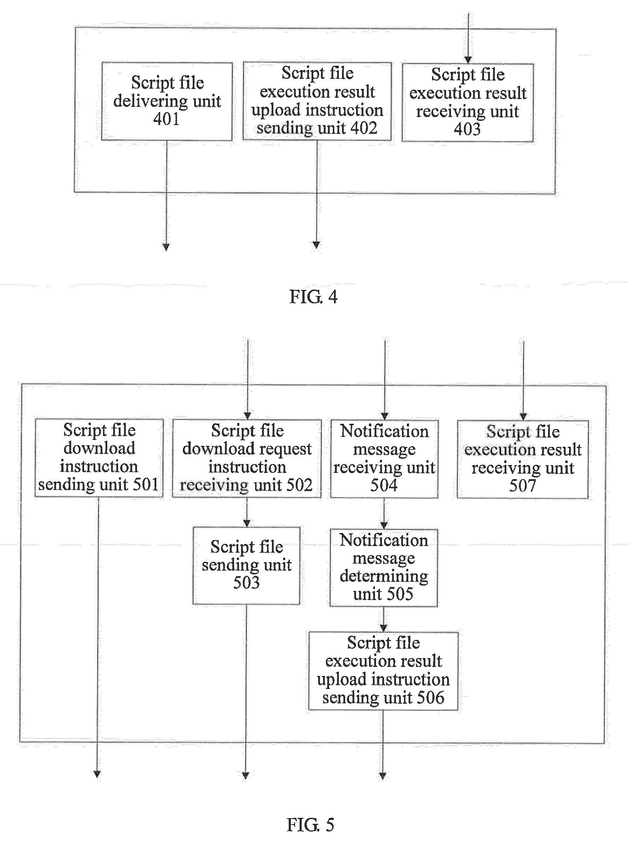

FIG. 4 is a structural diagram of Embodiment 4 of the present invention. Embodiment 4 of the present invention provides an auto-configuration server ACS, including:
a script file delivering unit 401, configured to deliver a script file to a CPE, where optionally, the script file may be stored in the ACS, and may also be stored in a third-party memory and may be acquired by a script file sending unit; and
a script file execution result upload instruction sending unit 402, configured to send a script file execution result upload instruction to the CPE; or a script file execution result receiving unit 403, configured to receive a script file execution result generated and reported by the CPE after the script file is executed.

### Embodiment 5

FIG. 5 is a structural diagram of Embodiment 5 of the present invention. Embodiment 5 of the present invention provides an auto-configuration server ACS applicable to Embodiment 2, including:
a script file download instruction sending unit 501, configured to send a script file download instruction to a CPE, to trigger the CPE to download a script file, where optionally, the script file download instruction may include a specified position from which the CPE downloads the script file; further optionally, the script file download instruction may be a Download() RPC instruction; and the script file download instruction needs to be extended, where an enumerated value that is used for indicating the script file is added in its file type parameter;
a script file download request instruction receiving unit 502, configured to: when the specified position is the ACS, receive a script file download request instruction sent by the CPE, where optionally, the script file download request instruction may be an HttpGet() RPC instruction;
a script file sending unit 503, configured to: when the specified position is the ACS, send the script file to the CPE according to the received script file download request instruction;
a notification message receiving unit 504, configured to receive a script file execution complete notification message sent by the CPE, and return a response, where optionally, the notification message may be TransferComplete() RPC;
a notification message determining unit 505, configured to determine whether a download instruction corresponding to the script file execution complete notification message is the extended script file download instruction sent by the script file download instruction sending unit, and if yes, start a script file execution result upload instruction sending unit 506, where optionally, the determining may be implemented by determining whether a parameter value of a Command Key in the notification message is the same as a parameter value of a Command Key in the download instruction Download() RPC; and specifically, if the two parameter values are the same, it indicates that the two correspond to each other, and a script file execution result receiving unit is started;
the script file execution result upload instruction sending unit 506, ccnfigured to send a script file execution result upload instruction to the CPE, to trigger the CPE to upload the script file execution result, where optionally, the script file execution result upload instruction includes a specified position to which the CPE uploads the script file execution result; and further optionally, the script file execution result upload instruction may be an Upload() RPC instruction, and the script file execution result upload instruction needs to be extended, where an enumerated value that is used for indicating the script file is added in its file type parameter; and
the script file execution result receiving unit 507, configured to: when the specified position is the ACS, receive the script file execution result sent by the CPE.

It should be noted that, the script file download instruction sending unit 501, the script file download request instruction receiving unit 502, and the script file sending unit 503 may execute functions of the script file delivering unit 401 in Embodiment 4.

### Embodiment 6

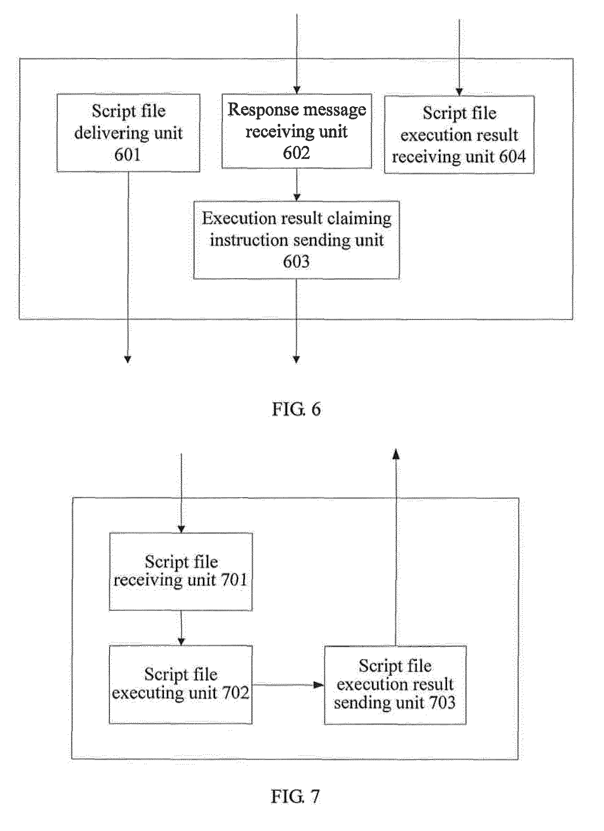

FIG. 6 is a structural diagram of Embodiment 6 of the present invention. Embodiment 6 of the present invention provides an auto-configuration server ACS applicable to Embodiment 3, including:
a script file delivering unit 601, configured to deliver content of a script file to a data model of a CPE, where the delivering is implemented by setting a parameter node which is in the data model of the CPE and is used for storing the script file, that is, writing the content of the script file in the parameter node, and setting a parameter node, which is in the data model of the CPE and is used for indicating a script execution status, to "execution is in progress"; and optionally, the delivering may be completed through a SetParameterValues() RPC instruction;
a response message receiving unit 602, configured to receive a response message that is sent by the CPE and is about that execution of the script file is completed or uncompleted, where further optionally, the response message may carry a Status parameter value, when Status = 0, which indicates that the execution of the script file is completed, turn to an execution result claiming instruction sending unit; and when Status = 1, which indicates that the execution of the script file is not completed yet, wait for an execution complete notification message;
the execution result claiming instruction sending unit 603, configured to: when the response receiving unit receives the response message that the execution of the script file is completed, send an execution result claiming instruction to the CPE, where optionally, the execution result claiming instruction may be a GetParameterValues() RPC instruction; and
a script file execution result receiving unit 604, configured to receive a script file execution result sent by the CPE.

### Embodiment 7

FIG. 7 is a structural diagram of Embodiment 7 of the present invention. Embodiment 7 of the present invention provides a customer premises equipment CPE, including:
a script file receiving unit 701, configured to receive a script file delivered by an ACS;
a script file executing unit 702, configured to execute the script file, and generate a script file execution result, where the script file execution result includes a response record of execution of a command in the script file; and
a script file execution result reporting unit 703, configured to report the script file execution result of the script file.

### Embodiment 8

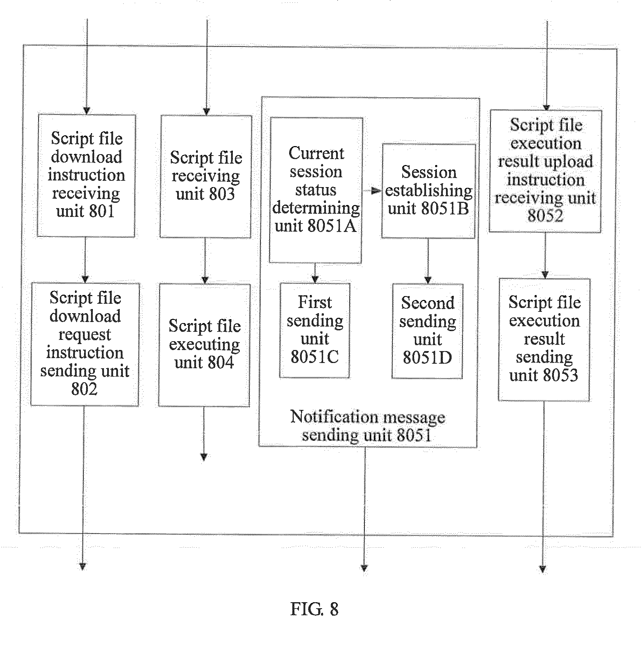

FIG. 8 is a structural diagram of Embodiment 8 of the present invention. Embodiment 8 of the present invention provides a customer premises equipment CPE applicable to Embodiment 2, including:
a script file download instruction receiving unit 801, configured to receive a script file download instruction sent by an ACS;
a script file download request instruction sending unit 802, configured to send a script file download request instruction to a specified position according to the script file download instruction, where optionally, the script file download request instruction may be an HttpGet() RPC instruction; and the script file download request instruction needs to be extended, where an enumerated value that is used for indicating a script file is added in its file type parameter;
a script file receiving unit 803, configured to receive a script file sent from the specified position;
a script file executing unit 804, configured to execute the script file, and generate a script file execution result, where the script file execution result includes a response record of execution of a command in the script file;
an execution result reporting unit 805, configured to report the script file execution result to the ACS, where the script file execution result reporting unit includes:
   a notification message sending unit 8051, configured to send a script file execution complete notification message to the ACS, where the notification message sending unit includes: a current session status determining unit 8051A, configured to determine whether a session exists currently; a session establishing unit 8051B, configured to: when the current session status determining unit determines that no session exists currently, establish a newly-established session, where optionally, the establishing a new session may be implemented through an Inform() RPC instruction; a first sending unit 8051C, configured to send the script file execution complete notification message to the auto-configuration server through the newly-established session, where optionally, the sending of the notification message may be implemented through a TransferComplete() RPC instruction; and a second sending unit 8051D, configured to: when a session exists currently, send the script file execution complete notification message to the auto-configuration server through the current session, where optionally, the sending of the notification message may be implemented through the TransferComplete() RPC instruction;
   a script file execution result upload instruction receiving unit 8052, configured to receive a script file execution result upload instruction that is delivered by the ACS according to the script file execution complete notification message, where the script file execution result upload instruction includes a specified position to which the customer premises equipment uploads the script file execution result; and
   a script file execution result sending unit 8053, configured to send the script file execution result to the specified position according to the execution result upload instruction.

### Embodiment 9

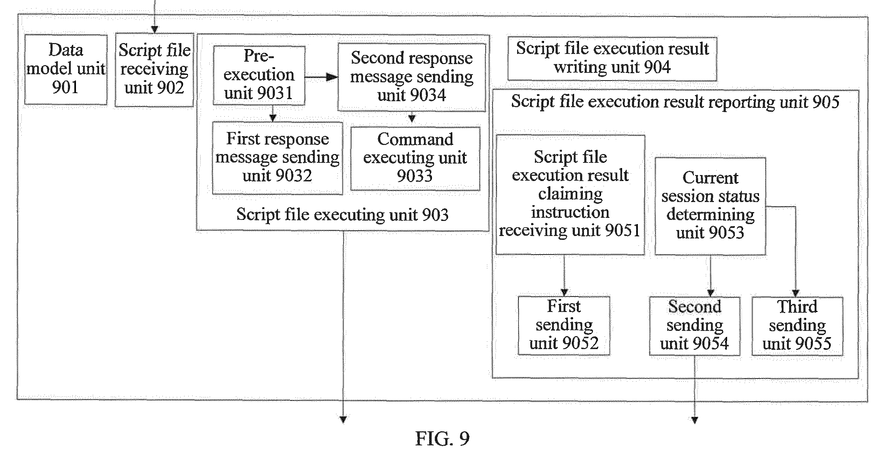

FIG. 9 is a structural diagram of Embodiment 9 of the present invention. Embodiment 9 of the present invention provides a customer premises equipment CPE applicable to Embodiment 3, including:
a data model unit 901, where different from a data model of a CPE in the prior art, a data model in Embodiment 9 of the present invention is an extended data model, where parameter nodes related to storage and execution of a script file are added; and optionally, the data model unit includes the following parameter nodes:
   Parameter node Description
   InternetGatewayDevice.Script.{i}. Script object
   InternetGatewayDevice.Script.{i}.Script Store content of a script file
   InternetGatewayDevice.Script.{i}.ScriptResult Store a script file execution result
   InternetGatewayDevice.Script.{i}.Status Indicate a script execution status
   (0 indicates that execution is in process, 1 indicates that execution is completed, and 2 indicates that a result is reported)
   a script file receiving unit 902, configured to receive content of a script file delivered by an ACS, and write the content of the script file in a corresponding parameter of the data model, where optionally, for an optional solution provided in the data model unit 901, the receiving content of a script file delivered by an ACS is to write the content of the script file in the parameter node InternetGatewayDevice.Script.{i}.Script, and set a value of the parameter node InternetGatewayDevice.Script.{i}.Status to 0, indicating that for the script file, "execution is in progress";
   a script file executing unit 903, configured to execute the script file, where the script file executing unit includes optional units: a pre-execution unit 9031, a first response message sending unit 9032, a second response message sending unit 9033, and a command executing unit 9034, where specifically:
      optionally, the pre-execution unit 9031 may be included, configured to pre-execute the script file, and determine whether execution of the script file can be completed immediately, where the pre-execution unit 9031 may include: an execution time determining unit 9031A, configured to determine, according to the number of instructions in the script file, an execution time required for executing the script file; and a comparison and determination unit 9031B, configured to compare the execution time with a preset threshold, and if the execution time is small than or equal to the threshold, determine that the execution of the script file can be completed immediately; and if the execution time is greater than the threshold, determine that the execution of the script file cannot be completed immediately;
      the first response message sending unit 9032 is configured to: when the execution of the script file is not completed yet, return an execution uncompleted response message to the auto-configuration server, and send an execution command to the command executing unit 9033, where optionally, the response message may be a SetParameterValues Response, where status = 1, indicating that the execution of the script is not completed yet;
      the first response message sending unit 9032, in a case that the script file executing unit includes the pre-execution unit 9031, receives an execution command sent by the pre-execution unit; and in a case that the script file executing unit does not include the pre-execution unit 9031, receives an execution command sent by the script file receiving unit;
      the second response message sending unit 9033 is configured to: when the execution of the script file is completed, return an execution complete response message to the auto-configuration server, where optionally, the response message may be a SetParameterValues Response, where status = 0, indicating that the execution of the script file is completed; and
      the second response message sending unit 9033, in the case that the script file executing unit includes the pre-execution unit 9031, receives an execution command sent by the pre-execution unit; and in the case that the script file executing unit does not include the pre-execution unit 9031, receives an execution command sent by the command executing unit; and
      the command executing unit 9034 is configured to execute a command in the script file according to the execution instruction sent by the first response message sending unit 9032 or the pre-execution unit 9031, to generate a script file execution result, and write the script file execution result in a corresponding parameter node of the data model unit 901, where optionally, for an optional solution provided in the data model unit 901, it is to write the script file execution result in InternetGatewayDevice.Script.{i}.ScriptResult, and set a value of the parameter node InternetGatewayDevice.Script.{i}.Status to 1, indicating that for the script file, "execution is completed";
      a script file execution result writing unit 904, configured to write the script file execution result in a corresponding node which is in the data model unit 901 of the CPE and is used for indicating the script file execution result, where the script file execution result includes a response record of execution of the command in the script file; and
      a script file execution result reporting unit 905, configured to report the script file execution result to the ACS, where the script file execution result reporting unit includes a script file execution result claiming instruction receiving unit 9051, a first sending unit 9052, a current session status determining unit 9053, a second sending unit 9054, and a third sending unit 9055, where specifically:
         the script file execution result claiming instruction receiving unit 9051 is configured to receive a script file execution result claiming instruction sent by the ACS;
         the first sending unit 9052 is configured to send the script file execution result to the auto-configuration server according to the script file execution result claiming instruction;
         the current session status determining unit 9053 is configured to: after the first response unit sends the script file execution uncompleted response message, and the command executing unit completes executing the script file, determine whether a session message exists currently;
         the second sending unit 9054 is configured to: when the current session status determining unit determines that no session exists currently, send the script file execution result to the auto-configuration server by establishing a new session; and
         the third sending unit 9055 is configured to: when the current session status determining unit determines that a session exists currently, send the script file execution result to the auto-configuration server through a user datagram protocol UDP event.

### Embodiment 10

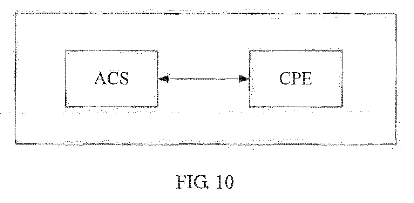

FIG. 10 is a structural diagram of Embodiment 10 of the present invention. Embodiment 10 of the present invention provides a service provisioning system, including:
an auto-configuration server ACS 1001, which includes a script file delivering unit and a script file execution result receiving unit, where the script file delivering unit is configured to deliver a script file to CPE, and the script file execution result receiving unit is configured for reception.
the customer premises equipment CPE 1002, which includes a script file receiving unit, a script file executing unit, a script file execution result generating unit, and a script file execution result sending unit, where the script file receiving unit is configured to receive the script file; the script file executing unit is configured to execute the script file; the script file execution result generating unit is configured to generate a script file execution result; and the script file execution result sending unit is configured to report the script file execution result.

The above embodiments are merely provided for describing the technical solutions of the present invention, but not intended to limit the present invention. Although the present invention has been described in detail with reference to the embodiments, persons of ordinary skill in the art should understand that modifications still can be made to the technical solutions described in the embodiments, or equivalent replacements still can be made to some technical features in the technical solutions; and such modifications or replacements do not make essence of corresponding technical solutions depart from the spirit and scope of the present invention.

It should be noted that, persons of ordinary skill in the art should understand that all of part of the steps of the method embodiments can be completed through hardware or by a program instructing relevant hardware. The program can be stored in a readable storage medium of a computer, and the storage medium may be a read-only memory, a flash memory, a magnetic disk, an optical disk, a hard disk or the like. When the program runs, the following steps are included: In one aspect, an auto-configuration server delivers a script file to a customer premises equipment, where the script file includes at least two commands required by the auto-configuration server for delivering a service to the customer premises equipment; and the auto-configuration server receives a script file execution result reported by the customer premises equipment and generated after the script file is executed.

In another aspect, a customer premises equipment acquires a script file, where the script file includes at least two commands required by an auto-configuration server for delivering a service to the customer premises equipment; the customer premises equipment executes the script file and generates a script file execution result; and the customer premises equipment reports the script file execution result.

## Claims

1. A service provisioning method, comprising:
delivering, by an auto-configuration server, a script file to a customer premises equipment, wherein the script file comprises at least two commands among commands required by the auto-configuration server for delivering a service to the customer premises equipment; and
triggering, by the auto-configuration server, the customer premises equipment to report a script file execution result generated after the script file is executed; or receiving, by the auto-configuration server, a script file execution result reported by the customer premises equipment and generated after the script file is executed.

2. The service provisioning method according to claim 1, wherein the delivering, by an auto-configuration server, a script file to a customer premises equipment is specifically:
sending, by the auto-configuration server, a script file download instruction to the customer premises equipment, wherein the script file download instruction comprises a specified position from which the customer premises equipment downloads the script file.

3. The service provisioning method according to claim 2, wherein the delivering, by an auto-configuration server, a script file to a customer premises equipment further comprises:
receiving, by the auto-configuration server, a script file download request instruction that is returned by the customer premises equipment according to the script file download instruction; and
sending, by the auto-configuration server, the script file to the customer premises equipment according to the script file download request instruction.

4. The service provisioning method according to claim 2, wherein the script file download instruction comprises a type parameter, and the type parameter comprises an enumerated value indicating a script file type.

5. The service provisioning method according to claims 1 to 4, wherein the triggering, by the auto-configuration server, the customer premises equipment to report a script file execution result generated after the script file is executed specifically comprises:
receiving, by the auto-configuration server, a script file execution complete notification message reported by the customer premises equipment; and
if the script file execution complete notification message corresponds to the script file download instruction, sending, by the auto-configuration server, a script file execution result upload instruction to the customer premises equipment, wherein the execution result upload instruction comprises a specified position to which the customer premises equipment uploads the script file execution result.

6. The service provisioning method according to claim 5, wherein the receiving, by the auto-configuration server, a script file execution result reported by the customer premises equipment and generated after the script file is executed specifically comprises:
receiving, by the auto-configuration server, the script file execution result that is uploaded by the customer premises equipment according to the script file execution result upload instruction.

7. The service provisioning method according to claim 1, wherein the customer premises equipment comprises a data model, and the data model comprises a parameter node related to the script file and execution of the script file.

8. The service provisioning method according to claim 7, wherein the delivering, by an auto-configuration server, a script file to customer premises equipment is specifically:
setting, by the auto-configuration server, a value of a parameter node which is in the data model of the customer premises equipment and indicates the script file.

9. A service provisioning method, comprising:
acquiring, by a customer premises equipment, a script file, wherein the script file comprises at least two commands among commands required by an auto-configuration server for delivering a service to the customer premises equipment;
executing, by the customer premises equipment, the script file and generating a script file execution result; and
reporting, by the customer premises equipment, the script file execution result.

10. The service provisioning method according to claim 9, wherein the acquiring, by a customer premises equipment, a script file is specifically:
receiving, by the customer premises equipment, a script file download instruction sent by the auto-configuration server, wherein the script file download instruction comprises a specified position from which the customer premises equipment downloads the script file; and
downloading, by the customer premises equipment, the script file from the specified position.

11. The service provisioning method according to claim 9 or 10, wherein the script file execution result generated after the customer premises equipment executes the script file comprises a response record of execution of a command in the script file.

12. The service provisioning method according to claim 9 or 10 or 11, wherein the reporting the script file execution result specifically comprises:
sending, by the customer premises equipment, a script file execution complete notification message to the auto-configuration server;
receiving, by the customer premises equipment, a script file execution result upload instruction that is delivered by the auto-configuration server according to the script file execution complete notification message, wherein the script file execution result upload instruction comprises a specified position to which the customer premises equipment uploads the script file; and
uploading, by the customer premises equipment, the script file execution result to the specified position according to the specified position in the execution result upload instruction.

13. The service provisioning method according to claim 12, wherein the sending, by the customer premises equipment, a script file execution complete notification message to the auto-configuration server specifically comprises:
if a session exists currently, sending, by the customer premises equipment, the script file execution complete notification message to the auto-configuration server through the current session; and
if no session exists currently, establishing, by the customer premises equipment, a session, and sending the script file execution complete notification message to the auto-configuration server through the newly-established session.

14. The service provisioning method according to claim 12, wherein the script file execution result upload instruction comprises a type parameter, and the type parameter comprises an enumerated value indicating a script file type.

15. The service provisioning method according to claim 9, wherein the customer premises equipment comprises a data model, and the data model comprises a parameter node related to the script file and execution of the script file.

16. The service provisioning method according to claim 15, wherein the acquiring, by a customer premises equipment, a script file is specifically:
receiving, by the customer premises equipment, the script file sent by the auto-configuration server, and writing the script file in a parameter node which is in the data model and indicates the script file.

17. The service provisioning method according to claim 9, 15, or 16, wherein the executing, by the customer premises equipment, the script file specifically comprises:
determining, by the customer premises equipment, whether execution of the script file can be completed immediately;
if the execution can be completed immediately, executing, by the customer premises equipment, a command in the script file, and returning an execution complete response message to the auto-configuration server; and
if the execution cannot be completed immediately, returning, by the customer premises equipment, an execution uncompleted response message to the auto-configuration server, and executing a command in the script file.

18. The service provisioning method according to claim 17, wherein the determining, by the customer premises equipment, whether execution of the script file can be completed immediately specifically comprises:
determining, by the customer premises equipment, according to the number of instructions in the script file, an execution time required for executing the script file; and
comparing, by the customer premises equipment, the execution time with a preset threshold, and if the execution time is smaller than or equal to the threshold, determining that the execution of the script file can be completed immediately, and if the execution time is greater than the threshold, determining that the execution of the script file cannot be completed immediately.

19. The service provisioning method according to claim 9, 15, or 16, wherein the executing, by the customer premises equipment, the script file specifically comprises:
executing, by the customer premises equipment, a command in the script file; and
returning, by the customer premises equipment, an execution complete response message to the auto-configuration server.

20. The service provisioning method according to claim 9, 15, or 16, wherein the executing, by the customer premises equipment, the script file specifically comprises:
returning, by the customer premises equipment, an execution uncompleted response message to the auto-configuration server; and
executing, by the customer premises equipment, a command in the script file.

21. The service provisioning method according to claim 9, claims 15 to 17, or claims 19 to 20, wherein the reporting, by the customer premises equipment, the script file execution result specifically comprises:
after completing executing the script file and returning the execution complete response message to the auto-configuration server, receiving, by the customer premises equipment, a script file execution result claiming instruction that is sent by the auto-configuration server according to the execution complete response message, and reporting the script file execution result to the auto-configuration server according to the script file execution result claiming instruction; or
after the customer premises equipment returns the execution uncompleted response message to the auto-configuration server and executes the script file, determining, by the customer premises equipment, whether a session exists currently, and determining, according to a determination result, a manner for reporting the script file execution result to the auto-configuration server.

22. The service provisioning method according to claim 21, wherein the script file execution result comprises a response record of execution of a command in the script file.

23. An auto-configuration server, comprising:
a script file delivering unit, configured to deliver a script file to a customer premises equipment, wherein the script file comprises at least two commands among commands required by the auto-configuration server for delivering a service to the customer premises equipment; and
a script file execution result upload instruction sending unit, configured to send a script file execution result upload instruction to the customer premises equipment; or a script file execution result receiving unit, configured to receive a script file execution result generated and reported by the customer premises equipment after the script file is executed.

24. The auto-configuration server according to claim 23, wherein the script file delivering unit comprises:
a script file download instruction sending unit, configured to send a script file download instruction to the customer premises equipment, wherein the script file download instruction comprises a specified position from which the customer premises equipment downloads the script file.

25. The auto-configuration server according to claim 24, wherein the script file delivering unit further comprises:
a script file download request instruction receiving unit, configured to receive a script file download request instruction sent by the customer premises equipment; and
a script file sending unit, configured to send the script file to the customer premises equipment according to the script file download request instruction.

26. The auto-configuration server according to claim 23 or 24, further comprising:
a notification message receiving unit, configured to receive a script file execution complete notification message reported by the customer premises equipment;
a notification message determining unit, configured to determine whether the script file execution complete notification message corresponds to the script file download instruction; and
a script file execution result upload instruction sending unit, configured to: when the script file execution complete notification message corresponds to the script file download instruction, send a script file execution result upload instruction to the customer premises equipment, wherein the script file execution result upload instruction comprises a specified position to which the customer premises equipment uploads the script file execution result.

27. The auto-configuration server according to claim 23, further comprising:
a response message receiving unit, configured to receive a response message that is sent by the customer premises equipment and is about that execution of the script file is completed or uncompleted; and
an execution result claiming instruction sending unit, configured to: when the response receiving unit receives the response message that the execution of the script file is completed, send an execution result claiming instruction to the customer premises equipment.

28. A customer premises equipment, comprising:
a script file receiving unit, configured to receive a script file;
a script file executing unit, configured to execute the script file and generate a script file execution result; and
a script file execution result reporting unit, configured to report the script file execution result.

29. The customer premises equipment according to claim 28, wherein the script file execution result comprises a response record of execution of a command in the script file.

30. The customer premises equipment according to claim 28 or 29, wherein the script file execution result reporting unit comprises:
a notification message sending unit, configured to send a script file execution complete notification message to an auto-configuration server;
a script file execution result upload instruction receiving unit, configured to receive a script file execution result upload instruction that is delivered by the auto-configuration server according to the script file execution complete notification message, wherein the script file execution result upload instruction comprises a specified position to which the customer premises equipment uploads the script file execution result; and
a script file execution result sending unit, configured to send the script file execution result to the specified position according to the script file execution result upload instruction.

31. The customer premises equipment according to claim 30, wherein the notification message sending unit comprises:
a current session status determining unit, configured to determine whether a session exists currently;
a session establishing unit, configured to: when the current session status determining unit determines that no session exists currently, establish a newly-established session;
a first sending unit, configured to send the script file execution complete notification message to the auto-configuration server through the newly-established session; and
a second sending unit, configured to: when a session exists currently, send the script file execution complete notification message to the auto-configuration server through the current session.

32. The customer premises equipment according to claim 30, wherein the script file execution result upload instruction comprises a type parameter, and the type parameter comprises an enumerated value indicating a script file type.

33. The customer premises equipment according to claim 28 or 29, wherein the script file executing unit comprises a pre-execution unit, a first response message sending unit, a second response message sending unit, and a command executing unit, wherein
the pre-execution unit is configured to determine whether execution of the script file can be completed immediately;
the first response message sending unit is configured to: when the pre-execution unit determines that the execution of the script file cannot be completed immediately, return an execution uncompleted response message to the auto-configuration server, and send an execution instruction to the command executing unit;
the second response message sending unit is configured to: when the pre-execution unit determines that the execution of the script file can be completed immediately, send an execution instruction to the command executing unit, and after the command executing unit completes the execution, return an execution complete response message to the auto-configuration server; and
the command executing unit is configured to execute a command in the script file according to the execution instruction sent by the first command response message sending unit or the second response message sending unit.

34. The customer premises equipment according to claim 33, wherein the pre-execution unit comprises:
an execution time determining unit, configured to determine, according to the number of instructions in the script file, an execution time required for executing the script file; and
a comparison and determination unit, configured to compare the execution time with a preset threshold, and if the execution time is smaller than or equal to the threshold, determine that the execution of the script file can be completed immediately, and if the execution time is greater than the threshold, determine that the execution of the script file cannot be completed immediately.

35. The customer premises equipment according to claim 28 or 29, wherein the script file executing unit comprises a first response message sending unit and a command executing unit, wherein
the first response message sending unit is configured to return an execution uncompleted response message to the auto-configuration server, and send an execution instruction to the command executing unit; and
the command executing unit is configured to execute a command in the script file according to the execution command sent by the first response message sending unit.

36. The customer premises equipment according to claim 28 or 29, wherein the script file executing unit comprises a command executing unit and a second response message sending unit, wherein
the command executing unit is configured to execute a command in the script file, and send an execution command to the second response message sending unit; and
the second response message sending unit is configured to return an execution complete response message to the auto-configuration server according to the execution command sent by the command executing unit.

37. The customer premises equipment according to claim 28 or 29, further comprising:
a data model unit, wherein the data model unit comprises a parameter node related to the script file and execution of the script file; and
a script file execution result writing unit, configured to write the script file execution result in a corresponding parameter node in the data model unit.

38. The customer premises equipment according to claims 33 to 37, wherein the script file execution result reporting unit comprises:
a script file execution result claiming instruction receiving unit, configured to receive a script file execution result claiming instruction that is sent by the auto-configuration server according to the execution complete response message;
a first sending unit, configured to send the script file execution result to the auto-configuration server according to the script file execution result claiming instruction;
a current session status determining unit, configured to: after the first response unit sends the script file execution uncompleted response message, and the command executing unit completes executing the script file, determine whether a session exists currently;
a second sending unit, configured to: when the current session status determining unit determines that no session exists currently, send the script file execution result to the auto-configuration server by establishing a new session; and
a third sending unit, configured to: when the current session status determining unit determines that a session exists currently, send the script file execution result to the auto-configuration server through a user datagram protocol UDP event.

39. A service provisioning system, comprising an auto-configuration server and a customer premises equipment, wherein
the auto-configuration server delivers a script file to the customer premises equipment, wherein the script file comprises at least two commands among commands required by the auto-configuration server for delivering a service to the customer premises equipment;
the customer premises equipment executes the script file and generates a script file execution result; and
the customer premises equipment reports the script file execution result.

40. The service provisioning system according to claim 39, wherein the auto-configuration server comprises:
a script file delivering unit, configured to deliver the script file to the customer premises equipment, wherein the script file comprises the at least two commands among the commands required by the auto-configuration server for delivering a service to the customer premises equipment; and
a script file execution result upload instruction sending unit, configured to send a script file execution result upload instruction to the customer premises equipment; or a script file execution result receiving unit, configured to receive the script file execution result generated and reported by the customer premises equipment after the script file is executed.

41. The service provisioning system according to claim 39, wherein the customer premises equipment comprises:
a script file receiving unit, configured to receive the script file;
a script file executing unit, configured to execute the script file and generate the script file execution result; and
a script file execution result reporting unit, configured to report the script file execution result to the auto-configuration server.
